# EUROPÄISCHE PATENTSCHRIFT

(11) **EP 2 753 658 B1**
(45) Veröffentlichungstag und Bekanntmachung des Hinweises auf die Patenterteilung: **11.10.2017**
(21) Anmeldenummer: 12742906.6
(22) Anmeldetag: 02.08.2012
(51) Int. Cl.: C08K 3/04, C08L 7/00, B60C 1/00

(54) **SCHWEFELVERNETZBARE GUMMIERUNGSMISCHUNG**
SULPHUR-CROSSLINKABLE RUBBERIZING MIXTURE
MÉLANGE D'ENGOMMAGE RÉTICULABLE AU SOUFRE

(30) Priorität: 09.09.2011 DE 102011053452
(43) Veröffentlichungstag der Anmeldung: 16.07.2014
(73) Patentinhaber: Continental Reifen Deutschland GmbH, 30165 Hannover (DE)
(72) Erfinder: KRAMER, Thomas, 32049 Herford (DE); RECKER, Carla, 30167 Hannover (DE); KREYE, Marc, 38104 Braunschweig (DE); TORBRÜGGE, Thorsten, 30855 Langenhagen (DE)
(74) Vertreter: Finger, Karsten
(86) Internationale Anmeldenummer: PCT/EP2012/065087
(87) Internationale Veröffentlichungsnummer: WO 2013/034370

(56) Entgegenhaltungen:
- EP-A1- 0 949 303
- EP-A1- 1 911 606
- EP-A1- 1 983 021
- EP-A1- 2 292 449
- EP-A2- 1 260 384

## Beschreibung

### Die Erfindung betrifft eine schwefelvernetzbare Gummierungsmischung für

Festigkeitsträger in Fahrzeugluftreifen, enthaltend 70 bis 100 phr (Gewichtsteile, bezogen auf 100 Gewichtsteile der gesamten Kautschuke in der Mischung) Naturkautschuk, bis zu 30 phr zumindest eines Polybutadiens, 40 bis 70 phr zumindest eines Rußes und ein Haftsystem. Ferner betrifft die Erfindung Fahrzeugluftreifen, die die mit Schwefel vernetzte Gummierungsmischung aufweisen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Fahrzeugluftreifen sind mit textilen oder metallischen Festigkeitsträgern, z. B. mit vermessingtem Stahlcord, verstärkt, um hohen mechanischen Beanspruchungen standzuhalten. Fahrzeugluftreifen weisen z. B. vermessingten Stahlcord im Gürtel, im Wulstkern und ggf. in der Karkasse auf. Um die Haltbarkeit des Gummi-Festigkeitsträger-Verbundes zu gewährleisten, soll die einbettende Kautschukmischung (Gummierungsmischung) eine gute Haftung zum Festigkeitsträger aufzeigen, wobei die Haftung durch Alterung und feuchte Lagerung nicht beeinträchtigt werden sollte. Die Vulkanisate sollten außerdem eine hohe dynamische und mechanische Beständigkeit und eine geringe Neigung zu Rissbildung und -wachstum aufweisen.

Die Haftung von Gummi zu textilen Festigkeitsträgern erfolgt über Imprägnierung (z. B. mit Resorcinformaldehydharzen in Kombination mit Kautschuklatices, RFL-Dip), im Direktverfahren mit Haftmischungen oder über Haftlösungen aus unvulkanisiertem Kautschuk mit Polyisocyanaten.

Die Gummi-Metall-Haftung kann durch Zusatz von so genannten Verstärkerharzen in der Gummierungsmischung positiv beeinflusst werden. Als Verstärkerharze sind z. B. Lignin, Phenol-Formaldehydharze mit Härter und Polymerharze bekannt. Zur Verbesserung der Gummi-Metall-Haftung ist es seit langem bekannt, Cobaltsalze und/oder ein Resorcin-Formaldehyd-Kieselsäuresystem oder ein Resorcin-Formaldehydsystem als Zusätze für die Gummierungsmischungen zu verwenden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt.

In bekannten Gummierungsmischungen werden als Füllstoffe Ruß und/oder Kieselsäure in folgenden Ruß-zu-Kieselsäure-Verhältnissen eingesetzt: 100 : 0 bis 80 : 20 sowie 20 : 80 bis 0 : 100.

Schwefelvernetzbare Gummierungsmischungen gemäß dem Oberbegriff des Anspruchs 1 sind aus der DE 696 02 212 T2 (s. Vergleichsversuche) bekannt. Sie werden dort z. B. als Gummierungsmischungen für den Gürtel eingesetzt. Die in der DE 696 02 212 T2 verwendeten Ruße sind solche des Typs N326. Dies ist neben dem Typ N330 einer der typischen Ruße für Gummierungsmischungen. Ferner sind Gummierungsmischungen gemäß dem Oberbegriff des Anspruchs 1 aus der EP 1 260 384 A2 bekannt.

Der vorliegenden Erfindung liegt die Aufgabe zugrunde, Gummierungsmischungen für Festigkeitsträger in Fahrzeugluftreifen bereit zu stellen, die hinsichtlich der Zielkonflikte zwischen Weiterreißfestigkeit, Steifigkeit und Wärmeaufbau verbessert ist. Die Lebensdauer von Fahrzeugluftreifen soll dadurch verbessert werden.

Gelöst wird die Aufgabe erfindungsgemäß dadurch, dass der Ruß ein nanostrukturierter Ruß mit rauer Oberfläche ist.

Es hat sich überraschenderweise herausgestellt, dass durch Verwendung derartiger Ruße die Hysterese von Gummierungsmischungen erniedrigt werden kann, was zu einem verringerten Wärmeaufbau führt, und gleichzeitig die Weiterreißfestigkeit verbessert werden kann. Reifen mit einer erfindungsgemäßen Gummierungsmischung z. B. als Gürtelgummierungsmischung erfahren dadurch eine deutliche Erhöhung der Lebensdauer.

Nanostrukturierte Ruße mit rauer Oberfläche sind z. B. aus der EP 0 949 303 B1, der EP 0 754 735 A2 oder aus Kautschuk Gummi Kunststoffe 52(10), 670 (1999) bekannt. Sie werden in Reifenlaufstreifenmischungen auf der Basis von SBR und BR zur Reduzierung des Rollwiderstandes und des Abriebs eingesetzt. Mischung auf der Basis von SBR und BR haben eine unzureichende Weiterreißfestigkeit. Vertrieben werden derartige nanostrukturierte Ruße mit rauer Oberfläche z. B. unter dem Namen Ecorax^{®} von der Firma Evonik Industries.

Die erfindungsgemäße Gummierungsmischung enthält 40 bis 70 phr zumindest eines nanostrukturierten Rußes mit rauer Oberfläche. Die Gummierungsmischung kann aber auch mehrere solcher Ruße im Gemisch enthalten.

Der nanostrukturierte Ruß zeichnet sich durch eine Ölabsorptionszahl OAN gemäß ASTM D 2414 von ≥ 135 mL/100g, eine spezifische, für Kautschuk zugängliche Oberfläche STSA gemäß ASTM D 6556 von ≥ 80 m²/g und eine Jodadsorptionszahl gemäß ASTM D 1510 von ≥ 90 mg/g aus, wobei das Verhältnis von OAN zu STSA > 1,1, vorzugsweise > 1,3, ist. Unter diese Ruße fallen beispielsweise die Ecorax^{®}-Typen 1670 und 1720 von der Firma Evonik Industries.

Die Gummierungsmischung enthält 70 bis 100 phr Naturkautschuk (NR), wobei es sich um auf biochemischem Wege in Pflanzen synthetisiertes Polyisopren mit einem cis-1,4-Gehalt von mehr als 99 % handelt. Für besonders gute Weiterreißeigenschaften enthält die Gummierungsmischung vorzugsweise 100 phr Naturkautschuk.

Als weiteren Kautschuk kann die Gummierungsmischung bis zu 30 phr, vorzugsweise 15 bis 25 phr, zumindest eines Polybutadiens (BR) enthalten. Für besonders gute Haftungseigenschaften und eine gutes Verarbeitungsverhalten ist das Polybutadien eines mit einem cis-Gehalt von mehr als 95 Gew.-% oder ein funktionalisiertes Li-Polybutadien, z. B. BR1250 H von der Firma Nippon Zeon oder solche funktionalisierten Polybutadiene, wie sie in der EP 2 289 990 A1 beschrieben sind.

Um die Weiterreißfestigkeit bei geringer Hysterese weiter zu verbessern, hat es sich als vorteilhaft erwiesen, wenn die Gummierungsmischung 40 bis 60 phr des zumindest einen nanostrukturierten Rußes enthält.

Zur weiteren Verbesserung der Reißeigenschaften der Gummierungsmischung enthält die Mischung 2 bis 15 phr zumindest eines hellen Füllstoffes. Bei dem Füllstoff kann es sich um Kreide oder Alumosilikate handeln. Bevorzugt wird aber Kieselsäure als heller Füllstoff eingesetzt. Diese wird in der Regel ohne Silankupplungsagenzien, d. h. als so genannter inaktiver Füllstoff, eingesetzt.

Die erfindungsgemäße Gummierungsmischung enthält ein Haftsystem. Je nachdem, ob die Gummierungsmischung für textile oder metallische Festigkeitsträger eingesetzt werden soll, kommt entweder ein Haftsystem für die Gummi-Textil-Haftung oder ein Haftsystem für die Gummi-Metall-Haftung zur Anwendung.

Gemäß einer bevorzugten Weiterbildung der Erfindung handelt es sich bei den Festigkeitsträgern um metallische Festigkeitsträger. Die Verbesserung der Haftung und des Rissverhaltens wirkt sich besonders vorteilhaft bei metallischen Festigkeitsträgern aus, da diese bei Haftungsverlust und Rissbildung verstärkt der Korrosion ausgesetzt sind, was die Lebensdauer der Fahrzeugluftreifens stark beeinträchtigt.

Wird die Gummierungsmischung zur Gummierung von metallischen Festigkeitsträgern, insbesondere Stahlcord, eingesetzt, wird vorzugsweise ein Stahlcordhaftsystem auf der Basis von organischen Cobaltsalzen und Verstärkerharzen und mehr als 2,5 phr Schwefel verwendet.

Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, - rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol^{®}-Typen, eingesetzt werden. Von den Resorcin-Harzen können auch die Vorkondensate eingesetzt werden.

Als weitere Zusatzstoffe kann die Kautschukmischung weitere übliche Zuschlagstoffe in üblichen Gewichtsteilen, wie Prozesshilfsmittel, Vulkanisationsbeschleuniger, Vulkanisationsverzögerer, Zinkoxid und Alterungsschutzmittel, enthalten.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann zur Gummierung unterschiedlichster Reifenbauteile, wie dem Wulstkern, den Wulstabdeckungen, dem Gürtel, der Karkasse oder den Gürtelbandagen, eingesetzt werden, wobei auch mehrere Bauteile innerhalb eines Reifens mit der erfindungsgemäßen Mischung versehen, d. h. in der Regel kalandriert, werden können.

Eine besonders hohe Verlängerung der Lebensdauer von Fahrzeugluftreifen kann man erzielen, wenn man die in der Regel metallischen Gürtellagen mit der erfindungsgemäßen Gummierungsmischung versieht. Ein Reifen, der einen Gürtel mit der erfindungsgemäßen Mischung als Gürtelgummierung aufweist und der nach herkömmlichen Verfahren aufgebaut und vulkanisiert wird, zeichnet sich durch eine sehr gute Gürtelhaltbarkeit aus.

Alternativ oder parallel dazu kann die Karkasse mit der Gummierungsmischung versehen werden. Vorzugsweise handelt sich dabei um die Stahlcord-Karkasse eines Nutzfahrzeugreifens.

Die Erfindung soll nun anhand von Vergleichs- und Ausführungsbeispielen, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V, die erfindungsgemäße Gummierungsmischung ist mit E gekennzeichnet. Die Mischungen V(1) und V(2) sind Gummierungsmischungen, die herkömmliche Ruße des Typs N 339 (STSA = 88 m²/g, OAN = 120 mL/100g, Jodadsorptionszahl = 90 mg/g) bzw. N 326 (STSA = 77 m²/g, OAN, 72 mL/100g, Jodadsorptionszahl = 82 mg/g) enthalten. Die Mischung E enthält demgegenüber einen nanostrukturierten Ruß mit rauer Oberfläche (Ecorax^{®} 1670 der Firma Evonik Industries).

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 und 300 % Dehnung bei Raumtemperatur gemäß DIN 53 504
- Bruchenergiedichte bestimmt im Zugversuch gemäß DIN 53 504, wobei die Bruchenergiedichte die bis zum Bruch erforderliche Arbeit, bezogen auf das Volumen der Probe, ist

Ferner wurden mit die Mischungen bezüglich ihrer dynamischen Haltbarkeit mit Hilfe eines "Tear Fatigue Analyzer" (TFA) charakterisiert. Typische Prüfprozeduren sind z. B. in Kautschuk Gummi Kunststoffe 45 (12), 1064 ff (1992) beschrieben. Die vorliegenden Ergebnisse wurden mit einer Pulsbelastung von 30/5 Hz und dynamischen Dehnungen von 5 bis 8 % erzielt. In der Auswertung wurde der mögliche Energieeintrag für eine Lebensdauer von 100 kZyklen ermittelt.
Außerdem wurden Nutzfahrzeugreifen einer Dimension 385/65 R22,5 mit einem vierlagigen Stahlgürtel mit den Mischungen V(1), V(2) und E als
Gummierungsmischungen für Stahlcordgürtellagen hergestellt und die Reifenhaltbarkeit auf einem Innenprüfstand bei einer konstanten Umgebungstemperatur von 38 °C geprüft. Die typische Prüfprozedur beinhaltet eine stufenweise Erhöhung der Last bis zum Reifenausfall.

**Tabelle 1**

| **Bestandteile** | **Einheit** | **V(1)** | **V(2)** | **E** |
|---|---|---|---|---|
| Naturkautschuk | phr | 100 | 100 | 100 |
| Ruß N 339 | phr | 52 | - | - |
| Ruß N 326 | phr | - | 52 | - |
| nanostrukturierter Ruß^{a} | phr | - | - | 52 |
| Kieselsäure | phr | 8 | 8 | 8 |
| Prozesshilfsmittel | phr | 7 | 7 | 7 |
| Alterungsschutzmittel | phr | 3 | 3 | 3 |
| organisches Cobaltsalz | phr | 0,65 | 0,65 | 0,65 |
| Harz aus Resorcin und Formaldehydspender | phr | 2,6 | 2,6 | 2,6 |
| Zinkoxid | phr | 8 | 8 | 8 |
| Beschleuniger | phr | 1,6 | 1,5 | 1,6 |
| Schwefel | phr | 5,5 | 6,9 | 5,5 |

| **Eigenschaften** | | | | |
|---|---|---|---|---|
| Shore A-Härte bei RT | Shore A | 75 | 74 | 73 |
| Shore A-Härte bei 70 °C | Shore A | 72 | 71 | 71 |
| Rückprallelastizität bei RT | % | 40 | 44 | 43 |
| Rückprallelastizität bei 70°C | % | 58 | 58 | 58 |
| Zugfestigkeit bei RT | MPa | 22 | 21 | 21 |
| Reißdehnung bei RT | % | 360 | 366 | 360 |
| Spannungswert 50 % | MPa | 2,4 | 2,3 | 2,3 |
| Spannungswert 300 % | MPa | 19,7 | 18,4 | 19,0 |
| Bruchenergiedichte | J/cm³ | 33 | 31 | 31 |
| TFA-Ergebnisse bei 100 Kilozyklen | | | | |
| Dehnung | % | 19,77 | 18,53 | 19,27 |
| Spannung | MPa | 1,31 | 1,17 | 1,19 |
| Elastische Energie | kPa | 109,44 | 92,12 | 97,69 |
| Diss. Energie | kPa | 46,27 | 39,64 | 36,52 |
| tan δ | - | 0,243 | 0,250 | 0,216 |
| Trommellaufzeit bis Ausfall | h | 172 | 112 | 199 |

| | | | | |
|---|---|---|---|---|
| ^{a} nanostrukturierter Ruß mit rauer Oberfläche, Ecorax^{®} 1670 der Firma Evonik Industries, STSA = 92 m²/g, OAN = 140 mL/100g, Jodadsorptionszahl = 100 mg/g | | | | |

Aus den Ergebnissen der TFA wird ersichtlich, dass bei der erfindungsgemäßen Mischung bei gleicher maximaler Dehnung ein geringerer Wärmeaufbau zu verzeichnen ist, sichtbar am kleinen Wert für die tan δ. Dies führt zu einer verbesserten Gürtelhaltbarkeit. Mit dem Ruß N 326 werden zudem keine hinreichenden maximalen Dehnungen erreicht.

Die Reifentests auf der Prüftrommel belegen die deutliche Haltbarkeitserhöhung durch Verwendung der erfindungsgemäßen Gummierungsmischung als Gürtelgummierung.

## Patentansprüche

1. Schwefelvernetzbare Gummierungsmischung für Festigkeitsträger in Fahrzeugluftreifen, enthaltend
- 70 bis 100 phr (Gewichtsteile, bezogen auf 100 Gewichtsteile der gesamten Kautschuke in der Mischung) Naturkautschuk,
- bis zu 30 phr zumindest eines Polybutadiens,
- 40 bis 70 phr zumindest eines Rußes und
- ein Haftsystem,
**dadurch gekennzeichnet, dass** der Ruß ein nanostrukturierter Ruß mit rauer Oberfläche ist und eine Ölabsorptionszahl OAN gemäß ASTM D 2414 von ≥ 135 mL/100g, eine spezifische, für Kautschuk zugängliche Oberfläche STSA gemäß ASTM D 6556 von ≥ 80 m²/g und eine Jodadsorptionszahl gemäß ASTM D 1510 von ≥ 90 mg/g aufweist, wobei das Verhältnis von OAN zu STSA > 1,1, vorzugsweise > 1,3, ist.

2. Gummierungsmischung nach Anspruch 1, **dadurch gekennzeichnet, dass** sie 100 phr Naturkautschuk enthält.

3. Gummierungsmischung nach zumindest einem der vorhergehenden Ansprüche, **dadurch gekennzeichnet, dass** sie 40 bis 60 phr des Rußes enthält.

4. Gummierungsmischung nach zumindest einem der vorhergehenden Ansprüche, **dadurch gekennzeichnet, dass** sie 2 bis 15 phr zumindest eines hellen Füllstoffes enthält.

5. Gummierungsmischung nach zumindest einem der vorhergehenden Ansprüche, **dadurch gekennzeichnet, dass** die Festigkeitsträger metallische Festigkeitsträger sind.

6. Gummierungsmischung nach Anspruch 5, **dadurch gekennzeichnet, dass** das Haftsystem ein Stahlcordhaftsystem auf der Basis von organischen Cobaltsalzen und Verstärkerharzen und mehr als 2,5 phr Schwefel ist.

7. Fahrzeugluftreifen, der eine mit Schwefel vernetzte Gummierungsmischung nach zumindest einem der Ansprüche 1 bis 6 aufweist.

8. Fahrzeugluftreifen nach Anspruch 7, **dadurch gekennzeichnet, dass** er eine Gürtelgummierung aus der Gummierungsmischung aufweist.

9. Fahrzeugluftreifen, insbesondere Nutzfahrzeugreifen, nach Anspruch 7 oder 8, **dadurch gekennzeichnet, dass** er eine Karkassgummierung aus der Gummierungsmischung aufweist.

## Claims

1. Sulfur-crosslinkable rubberizing mixture for reinforcement in pneumatic tires, comprising
- from 70 to 100 phr (parts by weight, based on 100 parts by weight of all of the rubbers in the mixture) of natural rubber,
- up to 30 phr of at least one polybutadiene,
- from 40 to 70 phr of at least one carbon black, and
- an adhesive system,
**characterized in that** the carbon black is a nanostructured carbon black with rough surface and an oil absorption number OAN in accordance with ASTM D2414 of ≥ 135 mL/100 g, a specific surface area STSA accessible for rubber in accordance with ASTM D6556 of ≥ 80 m²/g, and an iodine adsorption number in accordance with ASTM D1510 of ≥ 90 mg/g, where the ratio of OAN to STSA is > 1.1, preferably > 1.3.

2. Rubberizing mixture according to Claim 1, **characterized in that** it comprises 100 phr of natural rubber.

3. Rubberizing mixture according to at least one of the preceding claims, **characterized in that** it comprises from 40 to 60 phr of the carbon black.

4. Rubberizing mixture according to at least one of the preceding claims, **characterized in that** it comprises from 2 to 15 phr of at least one pale-colored filler.

5. Rubberizing mixture according to at least one of the preceding claims, **characterized in that** the reinforcement is metallic reinforcement.

6. Rubberizing mixture according to Claim 5, **characterized in that** the adhesive system is a steel cord adhesive system based on organic cobalt salts and on reinforcing resins, and more than 2.5 phr of sulfur.

7. Pneumatic tire which comprises a sulfur-crosslinked rubberizing mixture according to at least one of Claims 1 to 6.

8. Pneumatic tire according to Claim 7, **characterized in that** it comprises a belt-rubber mix made of the rubberizing mixture.

9. Pneumatic tire, in particular tire for a commercial vehicle, according to Claim 7 or 8, **characterized in that** it comprises a carcass-rubber mix made of the rubberizing mixture.

## Revendications

1. Mélange d'engommage réticulable au soufre pour supports de résistance dans des pneus automobiles, contenant :
- 70 à 100 pce (parties en poids, pour 100 parties en poids de l'ensemble des caoutchoucs dans le mélange) de caoutchouc naturel,
- jusqu'à 30 pce d'au moins un polybutadiène,
- 40 à 70 pce d'au moins un noir de carbone et
- un système adhésif,
**caractérisé en ce que** le noir de carbone est un noir de carbone nanostructuré à surface brute et présente un indice d'absorption d'huile OAN selon ASTM D 2414 ≥ 135 ml/100 g, une surface spécifique disponible pour le caoutchouc STSA selon ASTM D 6556 ≥ 80 m²/g et un indice d'adsorption d'iode selon ASTM D 1510 ≥ 90 mg/g, le rapport entre OAN et STSA étant > 1,1, de préférence > 1,3.

2. Mélange d'engommage selon la revendication 1, **caractérisé en ce qu'**il contient 100 pce de caoutchouc naturel.

3. Mélange d'engommage selon au moins l'une quelconque des revendications précédentes, **caractérisé en ce qu'**il contient 40 à 60 pce du noir de carbone.

4. Mélange d'engommage selon au moins l'une quelconque des revendications précédentes, **caractérisé en ce qu'**il contient 2 à 15 pce d'au moins une charge claire.

5. Mélange d'engommage selon au moins l'une quelconque des revendications précédentes, **caractérisé en ce que** les supports de résistance sont des supports de résistance métalliques.

6. Mélange d'engommage selon la revendication 5, **caractérisé en ce que** le système adhésif est un système adhésif pour câbles d'acier à base de sels de cobalt organiques et de résines renforçantes et plus de 2,5 pce de soufre.

7. Pneu automobile, qui comprend un mélange d'engommage réticulé au soufre selon au moins l'une quelconque des revendications 1 à 6.

8. Pneu automobile selon la revendication 7, **caractérisé en ce qu'**il comprend un engommage de ceinture en le mélange d'engommage.

9. Pneu automobile, notamment pneu de véhicule utilitaire, selon la revendication 7 ou 8, **caractérisé en ce qu'**il comprend un engommage de carcasse en le mélange d'engommage.
